# FASCICULE DE BREVET EUROPEEN

(11) **EP 3 503 121 B1**
(45) Date de publication et mention de la délivrance du brevet: **09.09.2020**
(21) Numéro de dépôt: 18212568.2
(22) Date de dépôt: 14.12.2018
(51) Int. Cl.: H01B 3/18, H01B 13/14, H01B 3/14

(54) **DISPOSITIF COMPRENANT UN CÂBLE OU UN ACCESSOIRE POUR CÂBLE CONTENANT UNE COUCHE COMPOSITE RÉSISTANTE AU FEU**
VORRICHTUNG, DIE EIN KABEL ODER EIN ZUBEHÖRTEIL FÜR EIN KABEL UMFASST, DAS EINE FEUERFESTE VERBUNDWERKSTOFFSCHICHT ENTHÄLT
DEVICE COMPRISING A CABLE OR A CABLE ACCESSORY CONTAINING A FIRE-RESISTANT COMPOSITE LAYER

(30) Priorité: 19.12.2017 FR 1762516
(43) Date de publication de la demande: 26.06.2019
(73) Titulaire: Nexans, 92400 Courbevoie (FR)
(72) Inventeur: AUVRAY, Thierry, 69006 LYON (FR); GYPPAZ, Franck, 69003 LYON (FR); ESTREBOOU, Nicolas, 69600 OULLINS (FR)
(74) Mandataire: Ipsilon

(56) Documents cités:
- WO-A1-2016/092200
- WO-A1-2017/098114
- GB-A- 454 461
- US-A1- 2014 026 787

## Description

La présente invention est relative à un dispositif comprenant un câble et/ou un accessoire pour câble, ledit câble et/ou ledit accessoire pour câble comportant au moins une couche composite obtenue à partir d'une composition composite à base d'au moins un dérivé de la cellulose, d'au moins un composé organique ayant une température d'ébullition ou de décomposition supérieure à 100°C environ, et d'au moins une composition cimentaire choisie parmi une composition géopolymère aluminosilicate et une composition à base de magnésium, ainsi qu'à un procédé de fabrication d'un tel dispositif.

Elle s'applique typiquement mais non exclusivement aux câbles électriques et/ou optiques destinés au transport d'énergie et/ou à la transmission de données, en particulier aux câbles électriques et/ou optiques de sécurité résistants au feu, notamment sans halogène, susceptibles de fonctionner pendant un laps de temps donné dans des conditions d'incendie, sans être pour autant propagateur d'incendie ni générateur de fumées importantes ; ainsi qu'à leurs accessoires tels que des jonctions et/ou terminaisons. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

Un câble d'énergie et/ou de télécommunication est un câble destiné au transport de l'énergie électrique et/ou à la transmission de données. Il comprend classiquement un ou plusieurs éléments conducteurs isolés, ou en d'autres termes un ou plusieurs conducteur(s) (électrique(s) et/ou optique(s)) allongé(s) entouré(s) par au moins une couche électriquement isolante. La couche électriquement isolante peut être typiquement une couche polymère électriquement isolante éventuellement en contact physique avec le ou les conducteur(s) électrique(s) et/ou optique(s). Ledit ou lesdits éléments conducteurs isolés sont entourés par une gaine extérieure de protection destinée à protéger mécaniquement le ou les éléments conducteurs isolés. Dans certaines constructions de câbles, il n'y a qu'une seule couche qui assure les deux fonctions d'isolant électrique et de gaine de protection.

Les matériaux généralement utilisés pour former la couche électriquement isolante et/ou ladite gaine de protection sont des matériaux composites à base de polymères, par exemple de polymères siliconés, et de divers additifs, notamment des charges de renfort telles que de la silice, et des charges ignifugeantes (ou retardateurs de flamme) destinées à améliorer leur résistance au feu.

Malgré la présence de telles charges, la résistance au feu de ces couches isolantes ne donne pas toujours entièrement satisfaction.

Afin de rendre un ou plusieurs câbles résistants au feu, il est connu de recouvrir lesdits câbles d'une couche électriquement isolante comprenant plusieurs bandes isolantes superposées comprenant du mica et des fibres de verre, et un liant polymère (e.g. polyorganosiloxane) au contact de chacune desdites bandes isolantes. Toutefois, le coût de production de ladite couche électriquement isolante est élevé (i.e. temps de préparation très long) et celle-ci présente un grand encombrement.

D'autres matériaux tels que la pierre, la brique, le ciment, le plomb, l'acier, le béton, la laine de roche, les céramiques, les géopolymères, etc... ont des propriétés de résistance au feu.

En particulier, les géopolymères sont essentiellement des composés chimiques minéraux ou des mélanges de composés constitués de motifs de type silico-oxyde (-Si-O-Si-O-), silico-aluminate (-Si-O-Al-O-), ferro-silico-aluminate (-Fe-O-Si-O-Al-O-), ou alumino-phosphate (-Al-O-P-O-), créés par un processus de géopolymérisation (i.e. polycondensation). Les géopolymères sont généralement capables de polymériser et de durcir à la température ambiante (ciments géopolymères). Il est également possible d'accélérer la vitesse de polymérisation et donc le durcissement des géopolymères en les soumettant à un traitement thermique. Le mécanisme exact de géopolymérisation demeure encore inconnu en raison notamment de la rapidité de la réaction. Les géopolymères les plus courants sont ceux basés sur les aluminosilicates désignés sous le terme « poly(sialate) » [ou « poly(silico-oxo-aluminate » ou (-Si-O-Al-O-)ₙ avec n désignant le degré de polymérisation]. Ces géopolymères aluminosilicates résultent de la polycondensation d'oligomères de type oligo(sialate) formés généralement à partir d'un mélange d'au moins une source d'aluminium, au moins une source de silicium, un réactif alcalin et d'eau. Les géopolymères basés sur les aluminosilicates ont été groupés en trois familles en fonction du rapport atomique Si/Al, lequel pouvant être égal à 1, 2 ou 3. On distingue les poly(sialates) répondant à la formule Mₙ(-Si-O-Al-O-)ₙ ou (M)-PS, les poly(sialate-siloxos) répondant à la formule Mₙ(-Si-O-Al-O-Si-O-)ₙ ou (M)-PPS, et les poly(sialate-disiloxos) répondant à la formule Mₙ(-Si-O-Al-O-Si-O-Si-O)ₙ ou (M)-PSDS, avec M représentant au moins un cation alcalin ou alcalino-terreux tel que K, Na, Li, Cs ou Ca et n désignant le degré de polymérisation.

Les géopolymères sont utilisés dans de nombreuses applications : conception de nouveaux matériaux dans les domaines du génie civil et de la construction, création de sculptures, fabrication de cloisons et de portes coupe-feu pour la protection contre les incendies, fabrication de revêtements d'un substrat, mortier, adhésif ou matériau de moulage, fabrication de panneaux anti-feu flexibles utilisés pour la protection contre le feu des ouvertures dans les murs, et également des passages pour câbles, et tout récemment comme structure de la « boîte noire » embarquée dans les avions.

En particulier, la demande internationale WO 2016/051049 A1 décrit une couche résistante au feu, utilisée comme couche de jonction de deux câbles résistants au feu, comportant au moins un matériau cimentaire tel qu'un ciment géopolymère. La couche peut comprendre en outre des additifs polymères tels que de l'acétate de cellulose ou d'autres dérivés de la cellulose non spécifiés. Toutefois, cette solution n'est pas adaptée, notamment en termes de flexibilité et d'adhérence, pour pouvoir servir de couche résistante au feu dans un câble électrique et/ou de transmission de données et/ou dans un accessoire pour câble, notamment lors d'un incendie.

Le but de la présente invention est de pallier les inconvénients des techniques de l'art antérieur en proposant un câble et/ou un accessoire pour câble, comprenant au moins une couche présentant de bonnes propriétés mécaniques, notamment en termes de flexibilité et d'adhérence, tout en garantissant une bonne résistance au feu et un coût de revient avantageux.

Un autre but de l'invention est de fournir un procédé simple, économique, facile à mettre en œuvre, permettant de fabriquer un câble et/ou un accessoire pour câble, comprenant au moins une couche qui présente de bonnes propriétés mécaniques, notamment en termes de flexibilité et d'adhérence, évite la propagation de la flamme, résiste au feu afin de fonctionner le plus longtemps possible, et limite sa dégradation dans des conditions thermiques extrêmes telles qu'un incendie.

La présente invention a pour premier objet un dispositif comprenant un câble d'énergie et/ou de télécommunication, et/ou un accessoire pour câble d'énergie et/ou de télécommunication, caractérisé en ce que ledit câble et/ou ledit accessoire pour câble comprend au moins une couche composite obtenue à partir d'une composition composite comprenant au moins un composé organique ayant une température d'ébullition ou de décomposition supérieure à 100°C environ, au moins un dérivé de la cellulose, et au moins une composition cimentaire choisie parmi une composition géopolymère aluminosilicate et une composition à base de magnésium comprenant un silicate de magnésium, un silicate alcalin, une base alcaline et de l'eau.

La composition cimentaire est une composition inorganique.

Elle comprend de préférence :
- de l'eau,
- du silicium (Si),
- de l'aluminium (Al) ou du magnésium (Mg),
- de l'oxygène (O), et
- au moins un élément choisi parmi le potassium (K), le sodium (Na), le lithium (Li), le césium (Cs) et le calcium (Ca).

La composition à base de magnésium comprend de préférence de l'eau, du silicium (Si), du magnésium (Mg), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère aluminosilicate comprend de préférence de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

Selon une forme de réalisation particulièrement préférée de l'invention, la composition géopolymère aluminosilicate comprend un silicate alcalin, un aluminosilicate, de l'eau, et éventuellement une base alcaline.

Dans la présente invention, la composition cimentaire est apte à former un matériau cimentaire.

En particulier, la composition géopolymère aluminosilicate est apte à former un géopolymère aluminosilicate. Les ingrédients de la composition géopolymère aluminosilicate peuvent donc subir une polycondensation pour former un géopolymère aluminosilicate. En effet, les géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

La composition à base de magnésium est apte à former un matériau cimentaire de texture semblable à celle obtenue avec la composition géopolymère aluminosilicate.

Par conséquent, la composition cimentaire de l'invention est différente d'une composition ou poudre céramique.

La composition cimentaire est sous la forme liquide ce qui permet de former avec le dérivé de la cellulose et le composé organique ayant une température d'ébullition ou de décomposition supérieure à 100°C environ, une composition composite homogène, notamment sous la forme d'une pâte composite homogène.

Le silicate alcalin de la composition cimentaire peut être choisi parmi les silicates de sodium, les silicates de potassium, et l'un de leurs mélanges. Les silicates alcalins commercialisés par la société Silmaco et par la société PQ Corporation sont préférés. Le silicate alcalin est de préférence un silicate de sodium.

Lorsqu'elle est présente, la base alcaline de la composition cimentaire peut être choisie parmi KOH, NaOH, et leurs mélanges.

L'aluminosilicate de la composition géopolymère aluminosilicate peut être choisi parmi les kaolins tels que les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la silice pyrogénée, les zéolithes, et un de leurs mélanges.

Parmi ces composés, les métakaolins sont préférés, notamment ceux commercialisé par la société Imérys.

Le silicate de magnésium de la composition à base de magnésium peut être du talc.

Selon une forme de réalisation particulièrement préférée de l'invention, la composition à base de magnésium comprend de 10 à 50% en masse environ d'un silicate de magnésium, de 8 à 35% en masse environ d'un silicate alcalin, de 5 à 20% en masse environ d'une base alcaline, et de 10 à 55% en masse environ d'eau.

Selon une forme de réalisation particulièrement préférée de l'invention, la composition géopolymère aluminosilicate comprend de 10 à 50% en masse environ d'un aluminosilicate, de 8 à 35% en masse environ d'un silicate alcalin, de 0 à 10% en masse environ d'une base alcaline, et de 10 à 55% en masse environ d'eau.

En particulier, la composition géopolymère aluminosilicate comprend de 25 à 65% en masse environ de matières solides (aluminosilicate, silicate alcalin et base alcaline lorsqu'elle est présente), et de préférence de 40 à 60% en masse environ, par rapport à la masse totale de ladite composition.

La composition cimentaire est sous la forme d'un liquide à température ambiante (e.g. 18-25°C).

La composition cimentaire représente de préférence de 10 à 80% en masse environ, de préférence encore de 30 à 80% en masse environ, et encore plus préférentiellement de 35 à 70% en masse environ, par rapport à la masse totale de la composition composite.

La composition cimentaire est de préférence une composition géopolymère aluminosilicate.

La composition composite comprend en outre un dérivé de la cellulose.

Dans la présente invention, l'expression « dérivé de la cellulose » signifie une cellulose fonctionnalisée, notamment fonctionnalisée au niveau de ses fonctions hydroxyles, et de préférence fonctionnalisée par un ou plusieurs groupes organiques.

Le dérivé de la cellulose est de préférence un ester de cellulose ou un éther de cellulose. En d'autres termes, les groupes organiques sont de préférence des groupes éther ou ester.

À titre d'exemples d'esters de cellulose, on peut citer l'acétate de cellulose, le triacétate de cellulose, le propionate de cellulose, l'acétopropionate de cellulose ou l'acétobutyrate de cellulose.

À titre d'exemples d'éthers de cellulose, on peut citer la méthylhydroxyéthylcellulose (MHEC), l'hydroxyméthyléthylcellulose (HMEC), la carboxyméthylcellulose (CMC), la méthylcellulose (MC), l'éthylcellulose (EC), l'hydroxyéthylcellulose (HEC), l'hydroxyéthylpropylcellulose (HEPC), l'hydroxypropylméthylcellulose (HPMC) ou un sel d'un des composés précités (tel qu'un sel d'un métal alcalin comme par exemple un sel de sodium).

La carboxyméthylcellulose (CMC) est préférée.

Selon l'invention, le dérivé de la cellulose représente de préférence de 1 à 25% en masse environ, de préférence encore de 3 à 20% en masse environ, et encore plus préférentiellement de 5 à 15% en masse environ, par rapport à la masse totale de la composition composite.

Le composé organique ayant une température d'ébullition ou de décomposition supérieure à 100°C permet en particulier de favoriser la dissolution du dérivé de la cellulose dans la composition composite.

Le composé organique a de préférence une température d'ébullition ou de décomposition supérieure ou égale à 140°C, et de préférence encore supérieure ou égale à 160°C.

Ledit composé organique est de préférence miscible dans l'eau. Cela permet ainsi de former une composition composite homogène en présence de la composition cimentaire.

Ledit composé organique est de préférence choisi parmi les polyols, notamment ceux comprenant de 2 à 12 atomes de carbone.

Parmi les polyols, on peut citer le xylitol, le sorbitol, le mannitol, le maltitol, le lactitol, l'isomalt, le glycérol, le dulcitol, l'iditol, l'éthylène glycol ou le propylène glycol.

Selon l'invention, le composé organique représente de préférence de 10 à 70% en masse environ, de préférence encore de 15 à 50% en masse environ, et encore plus préférentiellement de 20 à 40% en masse environ, par rapport à la masse totale de la composition composite.

Le composé organique peut être solide ou liquide à température ambiante (e.g. 18-25°C), et de préférence liquide à température ambiante.

La composition composite peut comprendre en outre un matériau carboné expansé, tel que du graphite expansé.

Le matériau carboné expansé peut représenter de 1 à 20% en masse environ, et de préférence de 5 à 20% en masse environ, par rapport à la masse totale de la composition composite.

Grâce au matériau carboné expansé, les propriétés de protection au feu de la couche composite peuvent avantageusement être améliorées.

La composition composite peut comprendre en outre un ou plusieurs additifs, notamment choisis parmi l'amidon, un plastifiant, une charge inerte, un colorant, un additif organique à structure polymère, un agent réticulant et un de leurs mélanges.

Un tel additif, lorsqu'il est présent, représente de préférence de 0,1 à 10% en masse environ, et de préférence encore de 2 à 5% en masse environ, par rapport à la masse totale de la composition composite.

L'amidon comprend généralement de l'amylose, de l'amylopectine, et éventuellement du phytoglycogène.

À titre d'exemple (et selon la source), l'amidon comprend de 15 à 30% en masse d'amylose, de 70 à 85% en masse environ d'amylopectine, et de 0 à 20% en masse de phytoglycogène, par rapport à la masse totale de l'amidon.

L'amidon peut être un amidon natif ou un amidon modifié, et de préférence un amidon natif.

L'amidon natif peut être un amidon de céréales (e.g. blé, maïs, orge, triticale, sorgo ou riz), de tubercules (e.g. pomme de terre ou manioc), de légumineuses (e.g. pois ou soja), de racines, de bulbes, de tiges, de fruits ou un de leurs mélanges.

L'amidon modifié peut être un amidon modifié physiquement, chimiquement ou par voie enzymatique.

L'amidon modifié peut être choisi parmi les amidons oxydés, les amidons hydrolysés par voie acide, oxydante ou enzymatique, les amidons modifiés (e.g. fonctionnalisés) par voie physico-chimique, comme notamment les amidons estérifiés et/ou éthérifiés.

La fonctionnalisation peut s'obtenir par acétylation en phase aqueuse avec de l'anhydride acétique, extrusion réactive d'anhydrides d'acides, d'anhydrides mixtes, de chlorures d'acides gras, d'oligomères de caprolactones ou de lactides, par hydroxypropylation en phase colle, par cationisation en phase sèche ou phase colle, par réticulation, par anionisation par phosphatation ou par succinylation, par silylation, par télomérisation au butadiène, etc...

Les amidons oxydés sont préférés.

Le plastifiant peut être destiné à améliorer la dispersion de l'amidon au sein de la couche composite (plastifiant de l'amidon) ou être utilisé à titre d'agent de mise en œuvre (bien connu sous l'anglicisme « processing aid »).

Le plastifiant peut être un stéarate de métal, un éthylène glycol, un polyol comme le glycérol, le sorbitol, le mannitol, le maltitol, le xylitol, un sucrose comme le glucose ou le fructose, un plastifiant contenant des groupes amides, tout type de plastifiant à base de polysaccharide(s) modifié(s) ou un de leurs mélanges.

Le plastifiant préféré est un stéarate de métal tel que le stéarate de zinc.

La charge inerte peut être choisie parmi le talc, les phyllosilicates, les hydroxydes hydratés tels que l'hydroxyde d'aluminium (ATH) ou l'hydroxyde de magnésium (MDH), les silices, les borates, les micas, et les kaolins.

Le talc est préféré.

Le colorant est de préférence un colorant liquide à température ambiante (i.e. à 18-25°C).

L'additif organique à structure polymère est de préférence choisi parmi les fibres de polyoléfine telles que les fibres de polypropylène, les polyéthylènes haute densité (HDPE), les aramides, et les fibres techniques de verre enduites de silicone ou d'un polymère organique de type polyéthylène, et un de leurs mélanges.

L'agent réticulant peut être un agent réticulant du dérivé de la cellulose.

La couche composite est de préférence résistante au feu.

Grâce à la combinaison d'un dérivé de la cellulose et d'un matériau cimentaire obtenu à partir de la composition cimentaire, une couche composite souple et/ou flexible peut être formée et celle-ci conserve son élasticité au cours du temps. Cette couche présente par conséquent de bonnes propriétés de flexibilité et d'adhérence, tout en garantissant une bonne résistance au feu. Le dérivé de la cellulose garantit l'élasticité de la couche composite et son adhérence sur la couche du câble avec laquelle elle est destinée à être en contact physique direct ; et le matériau cimentaire, quant à lui, assure la résistance au feu de la couche composite.

En d'autres termes, la couche composite du dispositif de l'invention est une couche hybride organique/inorganique homogène. En particulier, cette homogénéité est obtenue grâce à la combinaison au sein de la couche composite d'un matériau cimentaire (en particulier d'un géopolymère aluminosilicate) et d'un dérivé de la cellulose.

La couche composite de l'invention comprend un dérivé de la cellulose, un composé organique ayant une température d'ébullition ou de décomposition supérieure à 100°C, et un matériau cimentaire choisi parmi un géopolymère aluminosilicate et un matériau à base de magnésium, les composés précités étant tels que définis dans l'invention.

La couche composite de l'invention comprend de préférence de 10 à 60% en masse environ de matériau cimentaire, et encore plus préférentiellement de 20 à 50% en masse environ de matériau cimentaire, par rapport à la masse totale de la couche composite.

La couche composite de l'invention comprend de préférence de 3 à 20% en masse environ de dérivé de cellulose, et encore plus préférentiellement de 5 à 15% en masse environ de dérivé de cellulose, par rapport à la masse totale de la couche composite.

La couche composite peut comprendre en outre de 0,01 à 30% d'eau et/ou de 0,01 à 15% de composé organique, notamment provenant du procédé de préparation de ladite couche tel que décrit ci-après. L'eau et le composé organique, servant éventuellement à dissoudre ou à disperser le dérivé de cellulose et les constituants de la composition cimentaire pour préparer la composition composite, peuvent ne pas s'éliminer complètement à l'issu du procédé. L'eau et/ou le composé organique se retrouvent alors par exemple sous la forme de molécules formant des liaisons non covalentes (e.g. liaisons de Van der Waals) avec les autres composés de la couche.

Le matériau cimentaire est de préférence un géopolymère aluminosilicate.

Avantageusement, le dispositif conforme à l'invention satisfait à au moins l'une quelconque des normes de résistance au feu suivantes : EN50200, IEC60331-1, EN50399, IEC60331-11, IEC60331-21, IEC60331-23, IEC60331-25, DIN4102, NBN713020 addendum 3, EN50577, NFC32070 CR1, IEC600332-1 et BS6387CWZ, et de préférence à au moins l'une quelconque des normes IEC60331-11 et IEC60331-21.

Avantageusement, la couche composite définie précédemment satisfait à la norme de résistance au feu IEC 60331-11, avec des câbles électriques sous une tension de 10 kV exposés à une température de 750°C environ pendant 120 minutes.

La couche composite de l'invention peut être une couche extrudée et/ou une couche rubanée (i.e. sous la forme d'un ruban ou d'une bande), ou une couche sous la forme d'un bourrage.

Lorsque la couche composite est une couche extrudée et/ou rubanée, elle présente de préférence une épaisseur sensiblement constante et constitue notamment une enveloppe de protection continue.

La couche composite présente de préférence une épaisseur allant de 2 à 6 mm environ, et de préférence encore allant de 3 à 5 mm environ.

Lorsque l'épaisseur de la couche composite est inférieure à 1,5 mm, la protection thermique du dispositif de l'invention n'est pas suffisante.

La couche composite comprend de préférence un géopolymère aluminosilicate présentant un rapport molaire Si/Al allant de 1 à 35, et de préférence allant de 1,9 à 3.

Le géopolymère aluminosilicate de la couche composite peut être choisi parmi les poly(sialates) répondant à la formule (I) Mₙ(-Si-O-Al-O-)ₙ [(M)-PS], les poly(sialate-siloxos) répondant à la formule (II) Mₙ(-Si-O-Al-O-Si-O-)ₙ [(M)-PPS], et les poly(sialate-disiloxos) répondant à la formule (III) Mₙ(-Si-O-Al-O-Si-O-Si-O)ₙ [(M)-PSDS], formules dans lesquelles M représente au moins un cation alcalin K, Na, Li, Cs ou un de leurs mélanges, et n désignant le degré de polymérisation. Dans le composé de formule (I), le rapport molaire Si/Al est de 1, dans le composé de formule (II), le rapport molaire Si/Al est de 2, et dans le composé de formule (III), le rapport molaire Si/Al est de 3.

La couche composite de l'invention est de préférence non poreuse.

La couche composite de l'invention est de préférence une couche électriquement isolante.

Dans la présente invention, on entend par « couche électriquement isolante » une couche dont la conductivité électrique peut être d'au plus 1.10⁻⁹ S/m, et de préférence d'au plus 1.10⁻¹⁰ S/m (siemens par mètre) (à 25°C environ).

Grâce à la présence de la couche composite, le dispositif conforme à l'invention présente de bonnes propriétés mécaniques tout en ayant une excellente résistance au feu. En particulier, la couche composite est suffisamment flexible pour permettre la manipulation du câble (e.g. enroulage, pliage, torsion) sans pour autant entrainer d'altération rédhibitoire de ladite couche qui aurait pour conséquence de diminuer sa cohésion et sa résistance au feu. Par ailleurs, la couche composite reste intacte de la température ambiante à la température de fonctionnement du câble en charge (i.e. sous tension) et présente l'avantage de former une structure poreuse ordonnée dès 450°C, permettant ainsi d'assurer une protection renforcée contre la diffusion de la chaleur pour à des températures supérieures ou égales à 1000°C pendant une durée pouvant aller jusqu'à 120 min, notamment atteintes lors d'un incendie. Cette structure poreuse et rigide renferme de l'air qui par nature est un excellent isolant thermique.

En d'autres termes, la couche composite se transforme sous l'effet d'une température élevée, notamment d'une température allant de 450°C à 1000°C, généralement atteinte lors d'un incendie, pour former une couche résiduelle cohésive et poreuse qui protège le câble ou l'accessoire pour câble, et notamment les couches sous-jacentes et/ou l'élément conducteur allongé.

Enfin, la couche composite de l'invention présente une bonne élasticité ou souplesse, permettant de l'utiliser sous forme de ruban ou de bande.

Selon une première variante de l'invention, le dispositif comprend un câble d'énergie et/ou de télécommunication.

Un câble d'énergie et/ou de télécommunication comprend généralement au moins un élément conducteur allongé et au moins une gaine externe de protection, notamment électriquement isolante.

Selon une deuxième variante de l'invention, le dispositif comprend un accessoire pour câble d'énergie et/ou de télécommunication.

Un accessoire pour câble peut être une jonction ou une terminaison pouvant comprendre un assemblage de plusieurs couches de matériaux (e.g. de matériaux polymères) généralement de type caoutchouc silicone, éventuellement une ou plusieurs couches de renfort, par exemple une ou plusieurs couches métalliques, ainsi qu'une gaine externe de protection (e.g. anti-feu) telle que par exemple un ruban élastomère ou une bande de mica ou un assemblage d'une ou plusieurs couches d'éthylène-propylène-diène monomère (EPDM), éventuellement une ou plusieurs couches métalliques, et au moins une couche expansé d'EPDM, notamment sous la forme d'un tube à mémoire de forme.

La couche composite est de préférence une couche interne dudit câble ou dudit accessoire pour câble.

Selon l'invention, on entend par « couche interne », une couche qui ne constitue pas la couche la plus externe du câble ou de l'accessoire pour câble, et plus particulièrement :
- dans le cas d'un câble, une couche interposée entre l'élément conducteur allongé et une gaine externe de protection, notamment électriquement isolante, ladite couche étant ou non en contact direct avec l'élément conducteur allongé et
- dans le cas d'une jonction ou d'une terminaison, une couche interposée entre la gaine externe de protection et l'une des couches de matériau de type caoutchouc silicone et/ou l'une des couches de renfort, ladite couche étant ou non en contact direct avec ladite gaine externe.

La couche composite du câble de l'invention recouvre généralement un ou plusieurs éléments conducteurs allongés ou se positionne sur une gaine ou couche interne du câble ou de l'accessoire pour câble, elle fait alors office de bourrage.

Selon une forme de réalisation préférée, le dispositif est un câble.

Dans ce cas, le câble comprend au moins un élément conducteur allongé et la couche composite telle que définie dans l'invention entoure ledit élément conducteur allongé.

Le câble peut comprendre une pluralité d'éléments conducteurs allongés. La couche composite peut alors entourer la pluralité d'éléments conducteurs allongés du câble.

Le câble peut comprendre une pluralité de couches composites telles que définies dans l'invention, de préférence deux couches composites, et de façon particulièrement préférée deux couches composites internes.

Selon une première variante de ce mode de réalisation, le câble comprend un ou plusieurs éléments conducteurs allongés et la pluralité de couches composites entoure l'élément conducteur allongé ou la pluralité d'éléments conducteurs allongés.

À titre d'exemple, le câble peut comprendre deux couches composites telles que définies dans l'invention adjacentes.

Selon une deuxième variante de ce mode de réalisation, le câble comprend une pluralité d'éléments conducteurs allongés et chacune des couches composites entoure individuellement chacun des éléments conducteurs allongés pour former des éléments conducteurs allongés isolés.

Le ou les éléments conducteurs allongés du câble de l'invention sont de préférence des éléments électriquement conducteurs allongés. Le câble est par conséquent un câble électrique.

Le câble de l'invention peut comprendre en outre une gaine externe de protection, notamment électriquement isolante, entourant la ou les couche(s) composite(s).

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »)*.*

La gaine externe de protection représente la couche la plus externe du câble. Elle permet d'assurer l'intégrité mécanique du câble .

Elle comprend au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine est de préférence un polymère organique, de préférence encore un polymère d'éthylène, et de préférence encore un copolymère d'éthylène et d'acétate de vinyle, un polyéthylène linéaire basse densité ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant* »*.*

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, les argiles déshydratées et un de leurs mélanges.

L'invention a pour deuxième objet un procédé de fabrication d'un dispositif comprenant un câble d'énergie et/ou de télécommunication et/ou un accessoire pour câble d'énergie et/ou de télécommunication tel que défini selon le premier objet de l'invention, caractérisé en ce qu'il comprend au moins *les étapes suivantes :*
1) la préparation d'une composition composite telle que définie dans l'invention selon au moins les étapes suivantes :
   i) la préparation d'une composition cimentaire choisie parmi une composition géopolymère aluminosilicate comprenant un aluminosilicate, un silicate alcalin, de l'eau, et éventuellement une base alcaline, et une composition à base de magnésium comprenant un silicate de magnésium, un silicate alcalin, de l'eau, et une base alcaline,
   ii) le mélange de la composition cimentaire de l'étape i) avec un dérivé de la cellulose, un composé organique ayant une température d'ébullition ou de décomposition supérieure à 100°C environ, et éventuellement de l'eau ; et
2) la formation d'une couche composite telle que définie dans l'invention à partir de la composition composite obtenue à l'étape 1) :
   - soit autour d'un ou de plusieurs éléments conducteurs allongés et/ou autour d'une couche d'un câble d'énergie et/ou de télécommunication, lorsque le dispositif est un câble,
   - soit autour d'au moins l'une des couches d'une jonction ou d'une terminaison, lorsque le dispositif est un accessoire pour câble.

L'aluminosilicate, le silicate de magnésium, le silicate alcalin, la base alcaline, le dérivé de cellulose et le composé organique ayant une température d'ébullition ou de décomposition supérieure à 100°C environ sont tels que définis dans le premier objet de l'invention.

Le procédé conforme à l'invention est rapide, simple et avantageux d'un point de vue économique. Il permet de fabriquer en peu d'étapes un dispositif présentant une excellente résistance au feu, tout en garantissant de bonnes propriétés mécaniques, notamment en termes de flexibilité.

Une charge inerte et/ou un colorant et/ou un amidon et/ou un plastifiant de l'amidon et/ou un additif organique à structure polymère et/ou un agent réticulant tels que définis dans le premier objet de l'invention peuvent être ajoutés pendant l'étape ii) ou après l'étape ii).

Le matériau carboné expansé tel que défini dans le premier objet de l'invention peut être ajouté pendant l'étape ii). Ainsi, l'étape ii) met en œuvre le mélange de la composition cimentaire de l'étape i) avec un dérivé de la cellulose, un composé organique ayant une température d'ébullition ou de décomposition supérieure à 100°C environ, éventuellement de l'eau ; et le matériau carboné expansé. Cela peut avantageusement permettre d'assurer une parfaite dispersion et homogénéité de la composition composite.

L'étape ii) (étape de mélange) peut durer au moins 10 min.

La préparation de la composition géopolymère aluminosilicate selon l'étape i) est généralement effectuée à un pH élevé, notamment variant de 10 à 13.

L'étape i) comprend de préférence les sous-étapes suivantes :
i-a) la préparation d'une solution aqueuse de silicate alcalin de rapport molaire SiO₂/M'₂O allant de 1,6 à 35 environ, et de préférence de 1,6 à 4 environ, M' étant un métal alcalin, la concentration massique du silicate alcalin dans l'eau pouvant aller de 30 à 60% environ, et de préférence de 40 à 60% environ, et
i-b) le mélange d'un aluminosilicate sous forme de poudre de rapport molaire Al₂O₃/SiO₂ allant de 0,4 à 0,8 environ avec la solution aqueuse de silicate alcalin préparée à l'étape précédente, la concentration massique de l'aluminosilicate dans la solution aqueuse de silicate alcalin préparée à la sous-étape précédente pouvant aller de 10 à 80% environ, et de préférence de 25% à 65% environ.

L'association de la solution aqueuse de silicate alcalin et de la solution d'aluminosilicate permet la formation d'une composition géopolymère aluminosilicate liquide.

La solution aqueuse de silicate alcalin de la sous-étape i-a) peut être préparée en mélangeant du dioxyde de silicium SiO₂ ou un silicate alcalin avec une base M'OH dans laquelle M' est de préférence K, Na ou leur mélange.

Le dioxyde de silicium SiO₂ peut être choisi parmi les silices telles que la silice pyrogénée (bien connue sous l'anglicisme « fumed silica »), le quartz, et leurs mélanges.

En particulier, la base alcaline M'OH peut être dissoute dans de l'eau entraînant un dégagement de chaleur (réaction exothermique), puis le dioxyde de silicium SiO₂ ou le silicate alcalin peut être ajouté.

Le silicate alcalin peut être choisi parmi les silicates de sodium, les silicates de potassium, et l'un de leurs mélanges. Les silicates alcalins commercialisés par la société Silmaco et par la société PQ Corporation sont préférés. Le silicate alcalin est de préférence un silicate de sodium.

L'aluminosilicate peut être choisi parmi les kaolins tels que les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la silice pyrogénée, les zéolithes, et un de leurs mélanges.

Parmi ces composés, les métakaolins sont préférés, notamment ceux commercialisés par la société Imérys.

Le silicate de magnésium est de préférence du talc.

Lors de l'étape ii), l'eau peut être particulièrement utile pour dissoudre le composé organique lorsque celui-ci est un solide ou un liquide visqueux.

À l'issue de l'étape ii), on obtient une pâte homogène qui peut ensuite être utilisée dans l'étape 2) suivante.

L'étape ii) peut être effectuée en préparant séparément une solution comprenant le dérivé de cellulose, le composé organique et éventuellement de l'eau, puis en mélangeant cette solution avec la composition cimentaire de l'étape i).

Le matériau carboné expansé peut avantageusement être ajouté après le mélange de la solution comprenant le dérivé de cellulose, le composé organique et éventuellement de l'eau, avec la composition cimentaire de l'étape i). Cela peut avantageusement permettre d'assurer une parfaite dispersion et homogénéité de la composition composite.

Le géopolymère se forme au cours des étapes i) et ii).

Lorsque le dispositif est un câble, l'étape 2) peut être effectuée :
- par extrusion de ladite composition composite autour d'un ou de plusieurs éléments conducteurs allongés et/ou autour d'une couche d'un câble d'énergie et/ou de télécommunication, ou
- par formation d'une bande ou d'un ruban à partir de ladite composition composite, puis enroulement de ladite bande ou ruban autour d'un ou de plusieurs éléments conducteurs allongés et/ou autour d'une couche d'un câble d'énergie et/ou de télécommunication.

Lorsque le dispositif est un accessoire, l'étape 2) peut être effectuée par formation d'une bande ou d'un ruban à partir de ladite composition composite, puis enroulement de ladite bande ou ruban autour d'au moins l'une des couches d'une jonction ou d'une terminaison.

L'extrusion peut être effectuée à température ambiante ou à chaud, notamment à une température allant de 60°C à 110°C environ, et de préférence de 70°C à 95°C environ.

La bande ou le ruban peut être obtenue par extrusion, notamment à une température allant de 20 à 90°C environ ou par calandrage à température ambiante (e.g. 20-25°C).

L'enroulement peut en outre être effectué avec des zones de recouvrement.

Selon une forme de réalisation particulière de l'invention, et lorsque le dispositif est un câble d'énergie et/ou de transmission, le procédé peut comprendre en outre avant, pendant ou après l'étape 2), une étape 3) d'application d'une gaine externe de protection telle que définie dans le premier objet de l'invention, notamment électriquement isolante, autour de la couche composite.

La réalisation de cette gaine extérieure de protection peut notamment être réalisée par extrusion ou co-extrusion.

L'étape 3) est généralement effectuée à température ambiante puisque la géopolymérisation s'effectue à température ambiante.

L'invention a pour troisième objet une composition composite, notamment pour un dispositif comprenant un câble d'énergie et/ou de télécommunication, et/ou un accessoire pour câble d'énergie et/ou de télécommunication, ladite composition composite comprenant au moins un composé organique ayant une température d'ébullition ou de décomposition supérieure à 100°C environ, au moins un dérivé de la cellulose, et au moins une composition cimentaire choisie parmi une composition géopolymère aluminosilicate et une composition à base de magnésium comprenant un silicate de magnésium, un silicate alcalin, une base alcaline et de l'eau.

La composition composite peut être telle que définie dans les premier et deuxième objets de l'invention.

Le composé organique ayant une température d'ébullition ou de décomposition supérieure à 100°C, le dérivé de la cellulose, la composition cimentaire, la composition géopolymère aluminosilicate, et la composition à base de magnésium peuvent être telles que définis dans les premier et deuxième objets de l'invention.

De préférence, la composition composite de l'invention peut être utilisée pour former une couche composite extrudée et/ou rubanée (i.e. sous la forme d'un ruban ou d'une bande), ou une couche sous la forme d'un bourrage, ces couches étant telles que décrites dans l'invention.

L'invention sera mieux comprise, et d'autres buts, détails, caractéristiques et avantages de celle-ci apparaîtront plus clairement au cours de la description suivante de modes de réalisation particuliers de l'invention, donnés uniquement à titre illustratif et non limitatif, en référence aux figures annexées.

Sur ces figures :
- la figure 1 est une vue schématique de section en coupe transversale d'un câble électrique de l'art antérieur non conforme à l'invention ;
- la figure 2 est une vue schématique de section en coupe transversale d'un câble électrique selon un mode de réalisation de la présente invention.

Pour des raisons de clarté, seuls les éléments essentiels pour la compréhension de l'invention ont été représentés de manière schématique sur ces figures, et ceci sans respect de l'échelle.

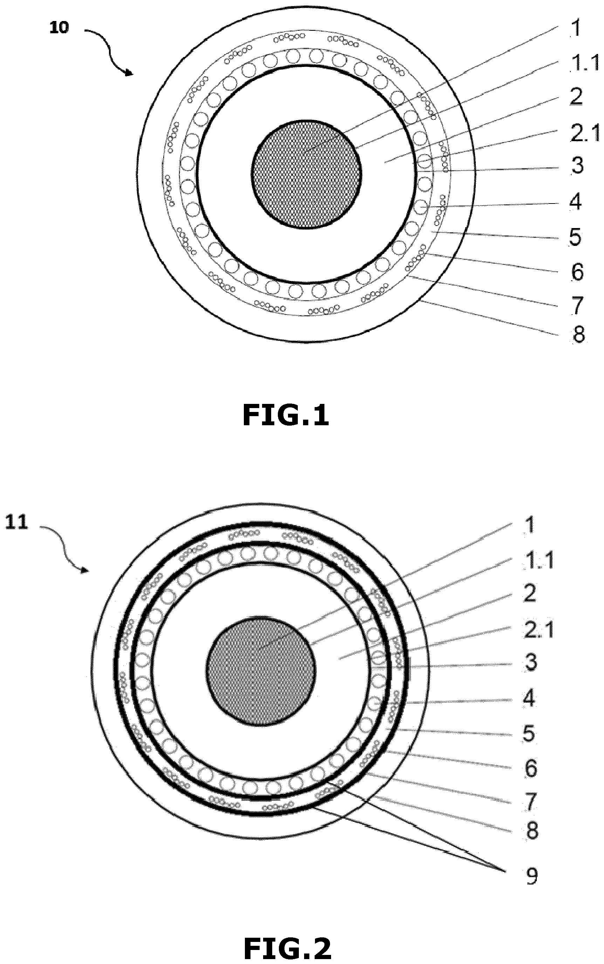

Le câble électrique 10, illustré sur la figure 1, correspond à un câble électrique à moyenne tension résistant au feu de type SHXCHX pour des applications de type marine.

Ce câble électrique 10 comprend: un élément électriquement conducteur central allongé 1 et, successivement et coaxialement autour de cet élément conducteur central 1, un écran semi-conducteur interne 1.1, une couche électriquement isolante 2 (e.g. en élastomère d'éthylène et de propylène réticulé, EPR), un écran semi-conducteur externe 2.1, une couche rubanée semi-conductrice 3, une tresse métallique 4 (e.g. constituée de fils de cuivre étamé de section circulaire), une gaine interne comprenant un ruban de polyester 5 et des fils de cuivre étamé 6, un ruban de polyester 7, et une gaine externe 8 (e.g. en élastomère).

Le câble électrique 11, illustré sur la figure 2, correspond à un câble électrique de structure similaire à celle du câble de la figure 1 mais dans lequel deux couches composites telles que définies dans l'invention ont été incorporées.

Ce câble électrique 11 comprend: un élément électriquement conducteur central allongé 1 et, successivement et coaxialement autour de cet élément conducteur central 1, un écran semi-conducteur interne 1.1, une couche électriquement isolante 2 (e.g. en élastomère d'éthylène et de propylène réticulé, EPR), un écran semi-conducteur externe 2.1, une couche rubanée semi-conductrice 3, une tresse métallique 4 (e.g. constituée de fils de cuivre étamé de section circulaire), une première couche composite 9 telle que définie dans l'invention, une gaine interne comprenant un ruban de polyester 5 et des fils de cuivre étamé 6, un ruban de polyester 7, une deuxième couche composite 9 telle que définie dans l'invention, et une gaine externe 8 (e.g. en élastomère).

Les exemples suivants permettent d'illustrer la présente invention. Les rapports entre les oxydes sont des rapports molaires et les % indiqués sont en masse.

### EXEMPLES

Les matières premières utilisées dans les exemples, sont listées ci-après :
- solution aqueuse de silicate de sodium à 50% massique environ de type « *waterglass* », Simalco, de formule Na₂O.2SiO₂ et de rapport molaire SiO₂/Na₂O de 2 environ,
- aluminosilicate Aluminosilicate, PoleStar® 200R, Imerys, de rapport molaire Al₂O₃/SiO₂ de 41/55 (i.e. de 0,745 environ),
- eau courante,
- hydroxyde de sodium, Sigma Aldrich, de pureté > 85%,
- carboxyméthylcellulose, Aqualon™, Ashland,
- glycérol, 8400, Roquette,
- graphite expansé, société LUH, GHL PX 98 HE.

Sauf indications contraires, toutes ces matières premières ont été utilisées telles que reçues des fabricants.

### Exemple 1 : préparation d'un dispositif résistant au feu conforme à l'invention

Une solution de silicate alcalin a été préparée en mélangeant 252 g d'une solution aqueuse de silicate de sodium, 276 g d'eau et 54 g d'hydroxyde de sodium. Puis 288 g d'aluminosilicate ont été mélangés avec la solution de silicate alcalin pour former une composition géopolymère aluminosilicate.

Ladite composition géopolymère aluminosilicate comprenait donc :
- 14,5% en masse de silicate de sodium,
- 6,2% en masse d'hydroxyde de sodium,
- 33,1% en masse d'aluminosilicate, et
- 46,2% en masse d'eau.

La composition géopolymère aluminosilicate comprenait 53,8% en masse environ de matières solides par rapport à la masse totale de ladite composition.

Séparément, une solution de dérivé de cellulose a été préparée en mélangeant 83,5 g de carboxyméthylcellulose (CMC) et 438,5 g de glycérol.

La solution de dérivé de cellulose a été ajoutée à la composition géopolymère aluminosilicate afin de former une composition composite.

La composition composite comprenait 6,0% en masse de CMC, 31,5% en masse de glycérol, 20,7% en masse d'aluminosilicate, 3,9% en masse d'hydroxyde de potassium, 9,0% en masse de silicate de sodium et 28,9% en masse d'eau.

La composition composite a été extrudée sous la forme d'un ruban à l'aide d'une extrudeuse MAPRE.

Le ruban avait une épaisseur de 3,5 mm environ.

### Exemple 2 : préparation d'un dispositif résistant au feu conforme à l'invention

Une solution de silicate alcalin a été préparée en mélangeant 95 g d'une solution aqueuse de silicate de sodium, 103 g d'eau et 21 g d'hydroxyde de sodium. Puis 108 g d'aluminosilicate ont été mélangés avec la solution de silicate alcalin pour former une composition géopolymère aluminosilicate.

Ladite composition géopolymère aluminosilicate comprenait donc :
- 14,5% en masse de silicate de sodium,
- 6,5% en masse d'hydroxyde de sodium,
- 33,0% en masse d'aluminosilicate, et
- 46,0% en masse d'eau.

La composition géopolymère aluminosilicate comprenait 54% en masse environ de matières solides, par rapport à la masse totale de ladite composition.

Séparément, une solution de dérivé de cellulose a été préparée en mélangeant 282 g de carboxyméthylcellulose (CMC), et 1480 g de glycérol.

La solution de dérivé de cellulose a été ajoutée à la composition géopolymère aluminosilicate afin de former une composition composite. Puis, 208 g de graphite expansé sont ajoutés à la composition composite, et le mélange résultant est malaxé pendant 10 min.

La composition composite comprenait 12,3% en masse de CMC, 64,4% en masse de glycérol, 4,7% en masse d'aluminosilicate, 0,9% en masse d'hydroxyde de sodium, 2,1% en masse de silicate de sodium, 9,0% en masse de graphite expansé, et 6,6% en masse d'eau.

La composition composite a été extrudée à chaud autour d'un élément électriquement conducteur allongé en cuivre de section 50 mm² à l'aide d'une extrudeuse vendue sous la dénomination commerciale ANDOUARD. La température au sein de l'extrudeuse allait de 40°C à 95°C environ, depuis la trémie 40°C à 95°C en sortie de filière.

La couche avait une épaisseur de 3,5 mm environ.

Ledit câble obtenu comprenait un élément électriquement conducteur allongé entouré par une couche composite électriquement isolante conforme à l'invention.

La couche composite du câble conforme à l'invention a été évaluée au regard des performances de résistance au feu selon les normes IEC 60331-11 et IEC 60331-21. Le câble tel qu'obtenu dans l'exemple 2, et à titre comparatif un câble non conforme à l'invention ne comprenant pas de couche composite de l'invention (i.e. élément électriquement conducteur allongé seul), ont été soumis à une tension de 10 kV à 750°C.

Les résultats de ce test sont présentés dans le tableau 1 ci-dessous :

**TABLEAU 1**

| **Câble** | **Tension appliquée** | **Temps avant claquage** (en min) |
|---|---|---|
| Câble conforme à l'invention de l'exemple 2 | 10 kV | 45 |
| Câble non conforme à l'invention | 10 kV | 13 |

Les résultats présentés dans le tableau 1 confirment la résistance au feu améliorée du câble de l'invention.

## Revendications

1. Dispositif comprenant un câble d'énergie et/ou de télécommunication, et/ou un accessoire pour câble d'énergie et/ou de télécommunication, **caractérisé en ce que** ledit câble et/ou ledit accessoire pour câble comprend au moins une couche composite obtenue à partir d'une composition composite comprenant au moins un composé organique ayant une température d'ébullition ou de décomposition supérieure à 100°C, au moins un dérivé de la cellulose, et au moins une composition cimentaire choisie parmi une composition géopolymère aluminosilicate et une composition à base de magnésium comprenant un silicate de magnésium, un silicate alcalin, de l'eau, et une base alcaline.

2. Dispositif selon la revendication 1, **caractérisé en ce que** la composition cimentaire comprend de l'eau, du silicium (Si), de l'aluminium (Al) ou du magnésium (Mg), de l'oxygène (O), et au moins un élément choisi parmi le potassium (K), le sodium (Na), le lithium (Li), le césium (Cs), et le calcium (Ca).

3. Dispositif selon la revendication 1 ou 2, **caractérisé en ce que** la composition géopolymère aluminosilicate comprend un silicate alcalin, un aluminosilicate, de l'eau, et éventuellement une base alcaline.

4. Dispositif selon l'une quelconque des revendications précédentes, **caractérisé en ce que** la composition géopolymère aluminosilicate comprend de 10 à 50% en masse d'un aluminosilicate, de 8 à 35% en masse d'un silicate alcalin, de 0 à 10% en masse d'une base alcaline et de 10 à 55% en masse d'eau.

5. Dispositif selon l'une quelconque des revendications précédentes, **caractérisé en ce que** la composition à base de magnésium comprend de 10 à 50% en masse d'un aluminosilicate, de 8 à 35% en masse d'un silicate alcalin, de 5 à 20% en masse d'une base alcaline et de 10 à 55% en masse d'eau.

6. Dispositif selon l'une quelconque des revendications précédentes, **caractérisé en ce que** la composition cimentaire représente de 10 à 80% en masse, par rapport à la masse totale de la composition composite.

7. Dispositif selon l'une quelconque des revendications précédentes, **caractérisé en ce que** le dérivé de la cellulose est un éther de cellulose ou un ester de cellulose.

8. Dispositif selon l'une quelconque des revendications précédentes, **caractérisé en ce que** le dérivé de la cellulose représente de 1 à 25% en masse, par rapport à la masse totale de la composition composite.

9. Dispositif selon l'une quelconque des revendications précédentes, **caractérisé en ce que** le composé organique est choisi parmi les polyols.

10. Dispositif selon l'une quelconque des revendications précédentes, **caractérisé en ce que** le composé organique représente de 10 à 70% en masse, par rapport à la masse totale de la composition composite.

11. Dispositif selon l'une quelconque des revendications précédentes, **caractérisé en ce que** la composition composite comprend en outre un matériau carboné expansé.

12. Dispositif selon l'une quelconque des revendications précédentes, **caractérisé en ce que** la composition composite comprend en outre un ou plusieurs additifs choisis parmi l'amidon, un plastifiant, une charge inerte, un colorant, un additif organique à structure polymère, un agent réticulant et un de leurs mélanges.

13. Dispositif selon l'une quelconque des revendications précédentes, **caractérisé en ce que** la couche composite de l'invention est une couche extrudée et/ou une couche rubanée, ou une couche sous la forme d'un bourrage.

14. Dispositif selon l'une quelconque des revendications précédentes, **caractérisé en ce que** la couche composite présente une épaisseur allant de 2 à 6 mm.

15. Dispositif selon l'une quelconque des revendications précédentes, **caractérisé en ce que** la couche composite est une couche interne dudit câble ou dudit accessoire pour câble.

16. Procédé de fabrication d'un dispositif tel que défini à l'une quelconque des revendications précédentes, **caractérisé en ce qu'**il comprend au moins les étapes suivantes :
1) la préparation d'une composition composite selon au moins les étapes suivantes :
i) la préparation d'une composition cimentaire choisie parmi une composition géopolymère aluminosilicate comprenant un aluminosilicate, un silicate alcalin, de l'eau, et éventuellement une base alcaline, et une composition à base de magnésium comprenant un silicate de magnésium, un silicate alcalin, de l'eau, et une base alcaline,
ii) le mélange de la composition cimentaire de l'étape i) avec un dérivé de la cellulose, un composé organique ayant une température d'ébullition ou de décomposition supérieure à 100°C environ, et éventuellement de l'eau ; et
2) la formation d'une couche composite à partir de la composition composite obtenue à l'étape 1) :
- soit autour d'un ou de plusieurs éléments conducteurs allongés et/ou autour d'une couche d'un câble d'énergie et/ou de télécommunication, lorsque le dispositif est un câble,
- soit autour d'au moins l'une des couches d'une jonction ou d'une terminaison, lorsque le dispositif est un accessoire pour câble.

17. Composition composite comprenant au moins un composé organique ayant une température d'ébullition ou de décomposition supérieure à 100°C, au moins un dérivé de la cellulose, et au moins une composition cimentaire choisie parmi une composition géopolymère aluminosilicate et une composition à base de magnésium comprenant un silicate de magnésium, un silicate alcalin, de l'eau, et une base alcaline.

## Patentansprüche

1. Vorrichtung, umfassend ein Energie- und/oder Telekommunikationskabel und/oder ein Zubehörteil für Energie- und/oder Telekommunikationskabel, **dadurch gekennzeichnet, dass** das Kabel und/oder das Zubehörteil für Kabel mindestens eine Verbundwerkstoffschicht umfasst, die aus einer Verbundwerkstoffzusammensetzung erhalten ist, die mindestens eine organische Verbindung mit einer Siede- oder Zerfallstemperatur von über 100 °C, mindestens ein Cellulosederivat und mindestens eine Zementzusammensetzung umfasst, die aus einer Aluminosilicat-Geopolymerzusammensetzung und einer Zusammensetzung auf der Basis von Magnesium ausgewählt ist, die ein Magnesiumsilikat, ein Alkalisilikat, Wasser und eine Alkalibase umfasst.

2. Vorrichtung nach Anspruch 1, **dadurch gekennzeichnet, dass** die Zementzusammensetzung Wasser, Silicium (Si), Aluminium (AI) oder Magnesium (Mg), Sauerstoff (O) und mindestens ein Element umfasst, das aus Kalium (K), Natrium (Na), Lithium (Li), Cäsium (Cs) und Calcium (Ca) ausgewählt ist.

3. Vorrichtung nach Anspruch 1 oder 2, **dadurch gekennzeichnet, dass** die Aluminosilicat-Geopolymerzusammensetzung ein Alkalisilikat, ein Aluminosilicat, Wasser und eventuell eine Alkalibase umfasst.

4. Vorrichtung nach einem der vorangehenden Ansprüche, **dadurch gekennzeichnet, dass** die Aluminosilicat-Geopolymerzusammensetzung 10 bis 50 Ma% eines Aluminosilicats, 8 bis 35 Ma% eines Alkalisilikat, 0 bis 10 Ma% einer Alkalibase und 10 bis 55 Ma% Wasser umfasst.

5. Vorrichtung nach einem der vorangehenden Ansprüche, **dadurch gekennzeichnet, dass** die Zusammensetzung auf der Basis von Magnesium 10 bis 50 Ma% eines Magnesiumsilikats, 8 bis 35 Ma% eines Alkalisilikats, 5 bis 20 Ma% einer Alkalibase und 10 bis 55 Ma% Wasser umfasst.

6. Vorrichtung nach einem der vorangehenden Ansprüche, **dadurch gekennzeichnet, dass** die Zementzusammensetzung 10 bis 80 Ma% in Bezug auf die Gesamtmasse der Verbundwerkstoffzusammensetzung darstellt.

7. Vorrichtung nach einem der vorangehenden Ansprüche, **dadurch gekennzeichnet, dass** das Cellulosederivat ein Celluloseether oder ein Celluloseester ist.

8. Vorrichtung nach einem der vorangehenden Ansprüche, **dadurch gekennzeichnet, dass** das Cellulosederivat 1 bis 25 Ma% in Bezug auf die Gesamtmasse der Verbundwerkstoffzusammensetzung darstellt.

9. Vorrichtung nach einem der vorangehenden Ansprüche, **dadurch gekennzeichnet, dass** die organische Verbindung aus den Polyolen ausgewählt ist.

10. Vorrichtung nach einem der vorangehenden Ansprüche, **dadurch gekennzeichnet, dass** die organische Verbindung 10 bis 70 Ma% in Bezug auf die Gesamtmasse der Verbundwerkstoffzusammensetzung darstellt.

11. Vorrichtung nach einem der vorangehenden Ansprüche, **dadurch gekennzeichnet, dass** die Verbundwerkstoffzusammensetzung ferner ein expandiertes Kohlenstoffmaterial umfasst.

12. Vorrichtung nach einem der vorangehenden Ansprüche, **dadurch gekennzeichnet, dass** die Verbundwerkstoffzusammensetzung ferner einen oder mehrere Zusätze umfasst, die aus Stärke, einem Weichmacher, einer inerten Charge, einem Farbstoff, einem organischen Zusatz mit Polymerstruktur, einem Vernetzungsmittel und einem ihrer Gemische ausgewählt sind.

13. Vorrichtung nach einem der vorangehenden Ansprüche, **dadurch gekennzeichnet, dass** die erfindungsgemäße Verbundwerkstoffschicht eine extrudierte Schicht und/oder eine Wickelschicht oder eine Schicht in Form einer Füllung ist.

14. Vorrichtung nach einem der vorangehenden Ansprüche, **dadurch gekennzeichnet, dass** die Verbundwerkstoffschicht eine Dicke von 2 bis 6 mm aufweist.

15. Vorrichtung nach einem der vorangehenden Ansprüche, **dadurch gekennzeichnet, dass** die Verbundwerkstoffschicht eine innere Schicht des Kabels oder des Zubehörteils für Kabel ist.

16. Verfahren zur Herstellung einer Vorrichtung wie in einem der vorangehenden Ansprüche definiert, **dadurch gekennzeichnet, dass** sie mindestens die folgenden Schritte aufweist:
1) das Herstellen einer Verbundwerkstoffzusammensetzung gemäß mindestens den folgenden Schritten:
i) das Herstellen einer Zementzusammensetzung, ausgewählt aus einer Aluminosilicat-Geopolymerzusammensetzung, umfassend ein Aluminosilicat, ein Alkalisilikat, Wasser und eventuell eine Alkalibase, und einer Zusammensetzung auf der Basis von Magnesium, umfassend ein Magnesiumsilikat, ein Alkalisilikat, Wasser und eine Alkalibase,
ii) das Mischen der Zementzusammensetzung von Schritt i) mit einem Cellulosederivat, einer organischen Verbindung mit einer Siede- oder Zerfallstemperatur von über zirka 100 °C und eventuell Wasser; und
2) das Bilden einer Verbundwerkstoffschicht aus der in Schritt 1) erhaltenen Verbundwerkstoffzusammensetzung:
- entweder um ein oder mehrere längliche leitende Elemente und/oder um eine Schicht eines Energie- und/oder Telekommunikationskabels, wenn die Vorrichtung ein Kabel ist,
- oder um mindestens die eine der Schichten einer Verbindung oder eines Endes, wenn die Vorrichtung ein Zubehörteil für Kabel ist.

17. Verbundwerkstoffzusammensetzung, umfassend mindestens eine organische Verbindung mit einer Siede- oder Zerfallstemperatur von über 100 °C, mindestens ein Cellulosederivat und mindestens eine Zementzusammensetzung, ausgewählt aus einer Aluminosilicat-Geopolymerzusammensetzung und einer Zusammensetzung auf der Basis von Magnesium, umfassend ein Magnesiumsilikat, ein Alkalisilikat, Wasser und eine Alkalibase.

## Claims

1. Device comprising a power and/or telecommunications cable, and/or an accessory for power and/or telecommunications cable, **characterized in that** said cable and/or said cable accessory comprises at least one composite layer obtained from a composite composition comprising at least one organic compound having a boiling point or decomposition temperature higher than 100 °C, at least one cellulose derivative, and at least one cement composition selected from among an aluminosilicate geopolymer composition and a magnesium-based composition comprising a magnesium silicate, an alkaline silicate, water and an alkaline base.

2. The device according to claim 1, **characterized in that** the cement composition comprises water, silicon (Si), aluminium (Al) or magnesium (Mg), oxygen (O) and at least one element selected from among potassium (K), sodium (Na), lithium (Li), caesium (Cs) and calcium (Ca).

3. The device according to claim 1 or 2, **characterized in that** the aluminosilicate geopolymer composition comprises an alkaline silicate, an aluminosilicate, water and optionally an alkaline base.

4. The device according to any of the preceding claims, **characterized in that** the aluminosilicate geopolymer composition comprises from 10 to 15 weight % of aluminosilicate, from 8 to 35 weight % of alkaline silicate, from 0 to 10 weight % of alkaline base and from 10 to 55 weight % of water.

5. The device according to any of the preceding claims, **characterized in that** the magnesium-based composition comprises from 10 to 50 weight % of magnesium silicate, from 8 to 35 weight % of alkaline silicate, from 5 to 20 weight % of alkaline base and from 10 to 55 weight % of water.

6. The device according to any of the preceding claims, **characterized in that** the cement composition represents from 10 to 80 weight % relative to the total weight of the composite composition.

7. The device according to any of the preceding claims, **characterized in that** the cellulose derivative is a cellulose ether or cellulose ester.

8. The device according to any of the preceding claims, **characterized in that** the cellulose derivative represents from 1 to 25 weight % relative to the total weight of the composite composition.

9. The device according to any of the preceding claims, **characterized in that** the organic compound is selected from among polyols.

10. The device according to any of the preceding claims, **characterized in that** the organic compound represents from 10 to 70 weight % relative to the total weight of the composite composition.

11. The device according to any of the preceding claims, **characterized in that** the composite composition further comprises an expanded carbon material.

12. The device according to any of the preceding claims, **characterized in that** the composite composition further comprises one or more additives selected from among starch, a plasticizer, inert filler, colouring agent, organic polymer-structured additive, crosslinking agent and one of the mixtures thereof.

13. The device according to any of the preceding claims, **characterized in that** the composite layer of the invention is an extruded layer and/or a wrap layer, or a layer in the form of bedding.

14. The device according to any of the preceding claims, **characterized in that** the composite layer has a thickness ranging from 2 to 6 mm.

15. The device according to any of the preceding claims, **characterized in that** the composite layer is an inner layer of said cable or of said cable accessory.

16. Method for manufacturing a device such as defined in any of the preceding claims, **characterized in that** it comprises at least the following steps:
1) preparing a composite composition according to at least the following steps:
i) preparing a cement composition selected from among an aluminosilicate geopolymer composition comprising an aluminosilicate, an alkaline silicate, water and optionally an alkaline base, and a magnesium-based composition comprising a magnesium silicate, an alkaline silicate, water and an alkaline base;
ii) mixing the cement composition of step i) with a cellulose derivative, an organic compound having a boiling point or decomposition temperature higher than about 100 °C, and optionally water; and
2) forming a composite layer from the composite composition obtained at step 1):
- either around one or more elongate conductive elements and/or around a layer of a power and/or telecommunications cable, when the device is a cable;
- or around at least one of the layers of a junction or terminal, when the device is a cable accessory.

17. Composite composition comprising at least one organic compound having a boiling point or decomposition temperature higher than 100°C, at least one cellulose derivative, and at least one cement composition selected from among an aluminosilicate geopolymer composition and a magnesium-based composition comprising a magnesium silicate, an alkaline silicate, water and an alkaline base.
